# EUROPEAN PATENT APPLICATION

(11) **EP 4 175 087 A1**
(43) Date of publication of application: **03.05.2023**
(21) Application number: 22203269.0
(22) Date of filing: 24.10.2022
(51) Int. Cl.: H02G 3/38, F21S 8/04, E04C 1/39, F21V 33/00

(54) **SUN PORCH, ROOF, TERRACE ROOF, PORCH, OR VERANDA WITH ELECTRICAL SECTION**

(30) Priority: 26.10.2021 NL 2029517
(71) Applicant: Gumax B.V., 5975 RW Sevenum (NL)
(72) Inventor: Welter, Sjors Raoul, 5975 RW Sevenum (NL); Coolen, Leonardus Petrus Albertus, 5975 RW Sevenum (NL)
(74) Representative: Arnold & Siedsma

(57) **Abstract**

The present invention relates to a construction such as a sun porch, roof, terrace roof, porch, or veranda, and to an assembly for connecting an electrical section to a construction such as a sun porch, roof, terrace roof, porch, or veranda.

According to the present invention, the construction comprises an electrical section comprising first and second coupling means arranged on opposite edges of a first side of the electrical section. A beam or girder of the construction comprises third and fourth coupling means arranged on opposite edges of a first outer side. The first, second, third, and fourth coupling means are configured to in a first coupling state, couple the electrical section to the beam or girder in a free-hanging manner by mutual engagement of the first and third coupling means, and, in a second coupling state, releasably fasten the electrical section to the beam or girder by mutual engagement of the first and third coupling means and by mutual engagement of the second and fourth coupling means.

By arranging the electrical section in the first coupling state, a user may electrically connected the light section or to make the necessary preparations therefor.

## Description

The present invention relates to a construction such as a sun porch, roof, terrace roof, porch, or veranda, and to an assembly for connecting an electrical section to a construction such as a sun porch, roof, terrace roof, porch, or veranda.

Constructions of the type above are known in the art. Typically, these constructions are arranged outdoor and may be equipped with one or more light sources. When connecting these light sources, it is desired to maintain the aesthetical features of the construction that existed prior to connection of the light sources. For example, the electrical wiring required for powering the light sources should not be visible.

Contemporary constructions may be delivered to the end customer in parts instead of being build on-site by a contractor. In the former case, the end customer builds the construction using a detailed construction manual. However, due to the often limited expertise of the end customer, several requirements of contemporary constructions have changed relative to previous constructions.

One requirement that has changed over time is related to the connection of one or more light sources. These light sources are typically attached to girders or beams of the construction for obtaining a downward orientated lighting. For the end customer it is important that the attachment of the light source(s) to the girder or beam is convenient and that the work required for attaching the light source(s) can be conducted by as few people as possible.

A complicated aspect of connecting the light source(s) is related to the fact that the light source(s) is/have to be mechanically connected to the beam or girder more or less simultaneously with electrically connecting the light source(s) to existing electrical wiring. Moreover, this part of the work has to be carried out while the beam or girder is positioned above the user's shoulders. For these reasons, in prior art approaches, it is customary that two or more persons are involved in connecting a light source to the beam or girder.

It is an object of the present invention to provide a solution for attaching the light source(s) or other electrical components to the beam or girder of a construction in which the abovementioned problems do not occur or at least to a lesser extent.

According to the invention, this object is achieved with a construction such as a sun porch, roof, terrace roof, porch, or veranda, which comprises an at least partially hollow beam or girder having a first outer side. The construction further comprises a supporting structure to which the beam or girder is coupled and/or that supports the beam, first electrical wiring guided by or provided in the supporting structure, and an electrical section comprising at least one of a light section that includes one or more light sources, a heating section that includes one or more heating elements, and a sound section that includes one or more speakers. The electrical section further comprising second electrical wiring for electrically connecting the one or more light sources, one or more heating elements, and/or one or more speakers.

According to the present invention, the first electrical wiring is configured to be electrically connected to an external source of electrical energy. Furthermore, the electrical section comprises first and second coupling means arranged on opposite edges of a first side of the electrical section, and the beam or girder comprises third and fourth coupling means arranged on opposite edges of the first outer side.

The first, second, third, and fourth coupling means are configured to in a first coupling state, couple the electrical section to the beam or girder in a free-hanging manner by mutual engagement of the first and third coupling means, and, in a second coupling state, fasten the electrical section to the beam or girder, preferably releasably, by mutual engagement of the first and third coupling means and by mutual engagement of the second and fourth coupling means. The first electrical wiring and second electrical wiring are configured to be electrically coupled in the first coupling state.

Using the construction of the present invention, a user may couple the electrical section to the beam or girder after which the electrical section hangs freely from the beam or girder. This allows the user to use both hands to electrically connect the first and second electrical wiring.

The first outer side of the beam or girder can be provided with an opening, wherein an end of the beam or girder can at least be partially open. The second electrical wiring can be configured to be inserted through the opening in the first coupling state, and configured to be fed through the at least partially open end. For example, the second electrical wiring may be provided with a suitable connector that can be inserted through the opening and the at least partially open end. Such connector may be connected to a suitable connector of the first electrical wiring.

The supporting structure can be configured for supporting the end of the beam or girder, the construction further comprising a clearance between the supported end and the supporting structure allowing a user to grasp the second electrical wiring and to connect the first electrical wiring and the second electrical wiring. For example, a user may insert the second electrical wiring through the opening, and push the second electrical wiring to move it inside the girder or beam towards supported end. Once accessible through the clearance, a user may at that point in time fasten the electrical section to the beam or girder as access to the second electrical wiring from a side of the electrical section is no longer required. Such connection between electrical section and beam or girder is preferably releasable. Furthermore, the supporting structure may comprise an elongated profile in which the first electrical wiring is guided, wherein the elongated profile comprises a first plate segment and one or more second plate segments extending substantially perpendicular to the first plate segment. The beam or girder may be configured to be coupled to the one or more second plate segments. Moreover, the abovementioned clearance may exist between the supported end and the first plate segment. The first plate segment can be configured to be coupled to a facade of a building.

Alternatively, the beam or girder may comprise a further opening near an end of the beam or girder, wherein the second electrical wiring is configured to be inserted through the opening in the first coupling state, and configured to be fed through the further opening.

The supporting structure may comprise an at least partially hollow girder, beam, upright, post, ceiling, or column, in which the first electrical wiring is provided. At a position where the supporting structure is coupled to the beam or girder, the first and second electrical wiring should be accessible for realizing the electrical connection.

The construction may further comprise a roof element supported by the beam or girder. More in particular, the construction may comprise a plurality of said beams or girders and/or a plurality of said roof elements. When the beam or girder is mounted in a substantially horizontal manner, it is noted that the first outer side of the beam or girder is typically directed away from the roof elements and corresponds to a bottom side of the beam or girder. In this case, the first and second coupling means are generally arranged on opposite edges of a top side of the electrical section.

In some embodiments, an electrical connection between the first electrical wiring and the second electrical wiring is configured to be inaccessible to a user when in the second coupling state.

The second and fourth coupling means can be configured to form a snap-fit connection. For example, the second and fourth coupling means can be configured to form a cantilever snap-fit connection. In such connection, one of the second and fourth coupling means may comprise a beam that is provided with a protrusion at one end and that is supported on an other end. The other of the second and fourth coupling means may comprise a recess or opening. The second and fourth coupling means may be configured to be coupled to each other by an initial deflection of the beam followed by a snapping back of the beam once the protrusion and recess are aligned. Preferably, the beam is comprised by the second coupling means.

The first and third coupling means can be configured to enable the light section to pivot relative to the beam or girder about a pivoting axis that extends in a first direction when switching from the first to the second coupling state. For example, the third coupling means may comprise a first laterally outwardly oriented opening and the first coupling means a first laterally inwardly extending body configured to be at least partially received in the first opening. The first body may be provided with one of a protrusion and recess, and the third coupling means may be provided with the other of the protrusion and recess arranged inside the first opening. The protrusion and recess may be configured to engage each other for the purpose of co-defining the pivoting axis and for allowing the light section to pivot relative to the beam or girder when switching from the first coupling state to the second coupling state. The protrusion may extend in a direction perpendicular to the first outer side and/or the protrusion and recess may be complementary shaped.

The protrusion and recess can be configured to allow the electrical section to pivot relative to the beam or girder in a second direction such that the third and fourth coupling means are brought closer to each other. Additionally or alternatively, the first body may abut a wall of the first opening thereby preventing further pivoting in the second direction in the second coupling state. To this end, the first body may comprise a central body part and an arm extending away from the central body part. This arm can be configured to extend parallel to and abut the wall of the first opening thereby preventing further pivoting in the second direction when the assembly is in the second coupling state. Moreover, the first body and first opening can be shaped such that the first body can be inserted into the first opening with the arm being held obliquely relative to the wall of the first opening, and such that in the second coupling state, the first body is clamped in the first opening against lateral displacement relative to the beam or girder by the arm abutting the wall and by the protrusion engaging the recess.

The protrusion may be comprised by the second coupling means. In this case, the second coupling means may comprise a laterally outwardly extending first section, wherein the first opening is formed between the first section and said wall of the beam or girder, and wherein the protrusion is formed at an outward end of the first section. Furthermore, the first coupling means may comprise a first side section and a second side section that is connected to and obliquely extends from the first side section, wherein the first side section is connected to the first body and to the second side section, wherein the first side section is shaped to abut the protrusion such that the protrusion is clamped between the first body, the first side section and the second side section in the second coupling state. Furthermore, the first coupling means and second coupling means can be configured such that, when in the first coupling state, the protrusion abuts the first side section and the arm abuts the first section. In addition, the first and second coupling means can be configured such that when switching from the first to the second coupling state, the light section is first allowed to displace relative to the beam or girder to bring the protrusion into engagement with the recess after which the electrical section can be pivoted relative to the beam or girder to bring the third and fourth coupling means into engagement with each other.

The beam or girder may comprise a central part and a coupling structure connected to a first outer side of the central part, wherein the coupling structure comprises the second and fourth coupling means. In this case, the wall is either defined by the central part or is part of the coupling structure.

In an embodiment, the coupling structure is integrally connected to the central part of the beam or girder. In such case, the beam or girder can be an extrusion section, for example made from stainless steel, aluminum, or a polymeric material such as polyvinyl chloride (PVC), high impact polystyrene (HIPS), acrylonitrile butadiene styrene (ABS), thermoplastic elastomer (TPE), Polyethylene terephthalate glycol (PETG), or high-density polyethylene (HDEP).

Alternatively, the coupling structure may comprise mechanical coupling means with which it is coupled to the central part of the beam or girder. Then, the coupling structure may be an extrusion section, and may for example be made from stainless steel, aluminum, or a polymeric material such as polyvinyl chloride (PVC), high impact polystyrene (HIPS), acrylonitrile butadiene styrene (ABS), thermoplastic elastomer (TPE), Polyethylene terephthalate glycol (PETG), or high-density polyethylene (HDEP).

The electrical section may also be an extrusion section, for example made from stainless steel, aluminum, or a polymeric material such as polyvinyl chloride (PVC), high impact polystyrene (HIPS), acrylonitrile butadiene styrene (ABS), thermoplastic elastomer (TPE), Polyethylene terephthalate glycol (PETG), or high-density polyethylene (HDEP). Furthermore, the electrical section may comprise one or more light sources that can be arranged on an elongated strip like substrate. In this case, the electrical section may comprise an elongated substrate receiving space in which the substrate is received, and an elongated blocking strip space in which a blocking strip is received that fixates the strip relative to a remainder of the light section. The one or more light sources may comprise one or more light-emitting diodes, LEDs.

According to a second aspect, the present invention relates to an assembly for connecting an electrical section to a construction such as a sun porch, roof, terrace roof, porch, or veranda. This assembly comprises the abovementioned coupling structure that is configured to be coupled to a first outer side of a beam or girder of the construction, and the abovementioned electrical section.

Next, the present invention will be described in more detail referring to the appended drawings, wherein:
Figure 1 illustrates an embodiment of a construction in accordance with the present invention;
Figures 2-8 illustrate the various stages of coupling a light section to a beam in the construction of figure 1; and
Figure 9 illustrates a perspective view of beam of the construction of figure 1 to which a light section is coupled.

In the embodiments described next, an electrical section will be described that comprises a light section with one or more light sources. However, the skilled person will readily understand that instead of the light section a heating section with one or more heating elements or a sound section with one or more speakers could have been used. Furthermore, a combination of these sections could equally have been used. In addition, in the embodiments that are described next, the electrical section is mounted to a horizontally arranged beam or girder. However, the present invention is not limited to this mounting configuration. Embodiments in which the electrical section is mounted in a different orientation and/or to a different structure, e.g. to a vertical upright or to a ceiling, are equally possible.

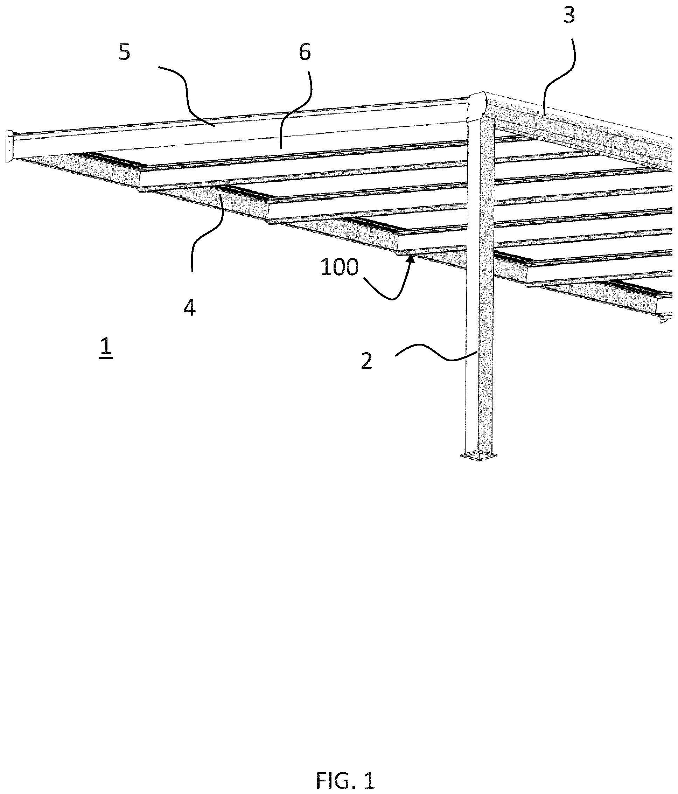

Figure 1 illustrates an embodiment of a construction 1 in accordance with the present invention. It comprises an upright 2, a girder 3, and a supporting structure 4 that is mounted to a facade of a building (not shown). Construction 1 further comprises a plurality of beams 5 that are connected on one end to girder 3 and on an other end by supporting structure 4. In addition, construction 1 comprises a plurality of roof elements 6. Furthermore, as shown, beams 5 are supported by upright 2 via girder 3 and by supporting structure 4.

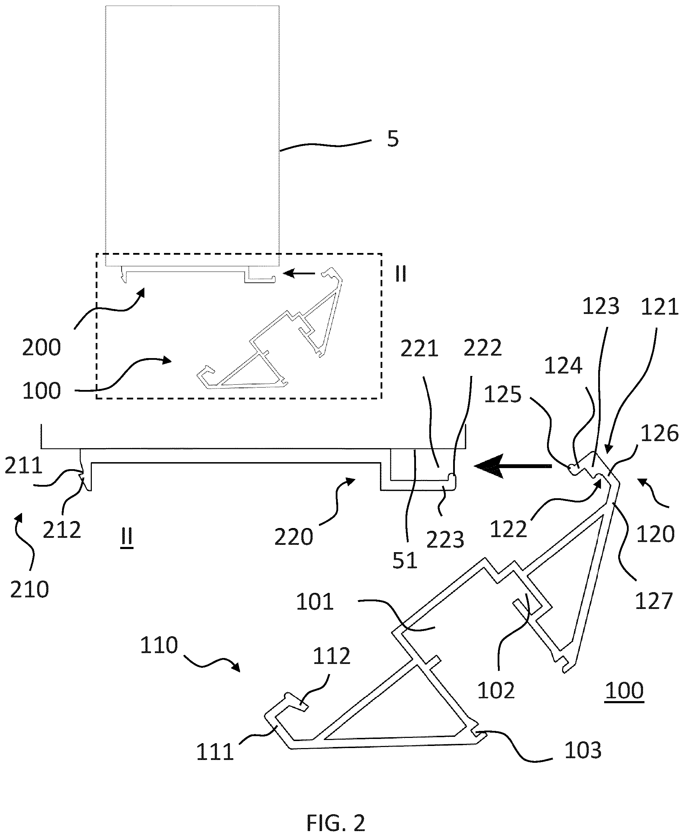

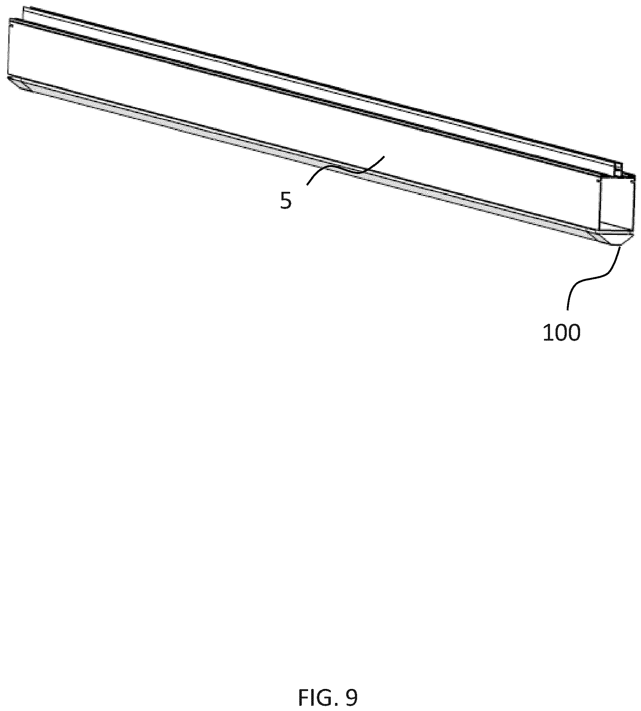

In figure 1, beams 5 are provided on a bottom side thereof with light sections 100. This is also shown in figure 9. Next, the process of coupling a light section 100 to beam 5 will be explained referring to figures 2-8.

As shown in figure 2, light section 100 is coupled to a bottom side of beam 5 using a coupling structure 200. This latter structure can be an integral part of beam 5. Alternatively, beam 5 may comprise a central part and a coupling structure 200 mounted to the bottom side of such central part. Furthermore, coupling structure 200 can comprise a single elongated structure or may comprise a plurality of preferably identical units. Hereinafter, the central part of a beam and the beam itself are both referred to using reference sign 5. However, it should be noted that the present invention equally relates to an assembly comprising the combination of a coupling structure and a light section. Such assembly could be used to provide lighting in already realized constructions.

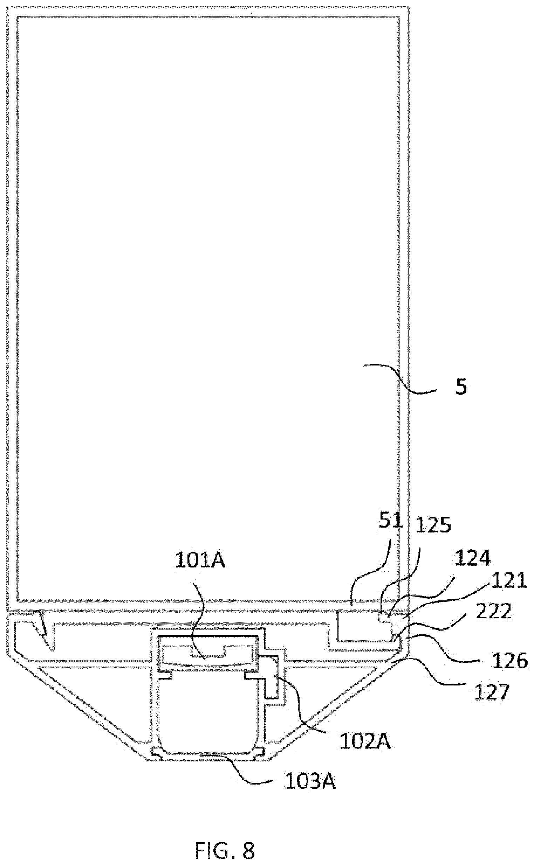

Light section 100 is generally formed by extrusion techniques, for example from Aluminum, polyvinyl chloride (PVC), high impact polystyrene (HIPS), acrylonitrile butadiene styrene (ABS), thermoplastic elastomer (TPE), Polyethylene terephthalate glycol (PETG), or high-density polyethylene (HDEP), and comprises a first space 101 in which a LED strip is arranged (not shown). This LED strip can be clamped using a clamping member arranged in a second space 102. The clamping member can be manufactured from glass fiber. In addition, a diffusor plate can be arranged in a third space 103. The cross sectional view of figure 8 illustrates LED strip 101A, clamping member 102A, and diffusor plate 103A.

Light section 100 comprises coupling means for coupling one side of light section 100 to coupling structure 200. These coupling means 110, referred to as second coupling means, comprise a beam 111 that is provided with a protrusion 112. Coupling structure 200 comprises coupling means 210 for cooperating with coupling means 110. Coupling means 210, referred to as fourth coupling means, comprises a recess 211 and ledge 212. Together, recess 211, ledge 121, beam 111, and protrusion 112 form a snap-fit connection, and more in particular a cantilever snap-fit connection.

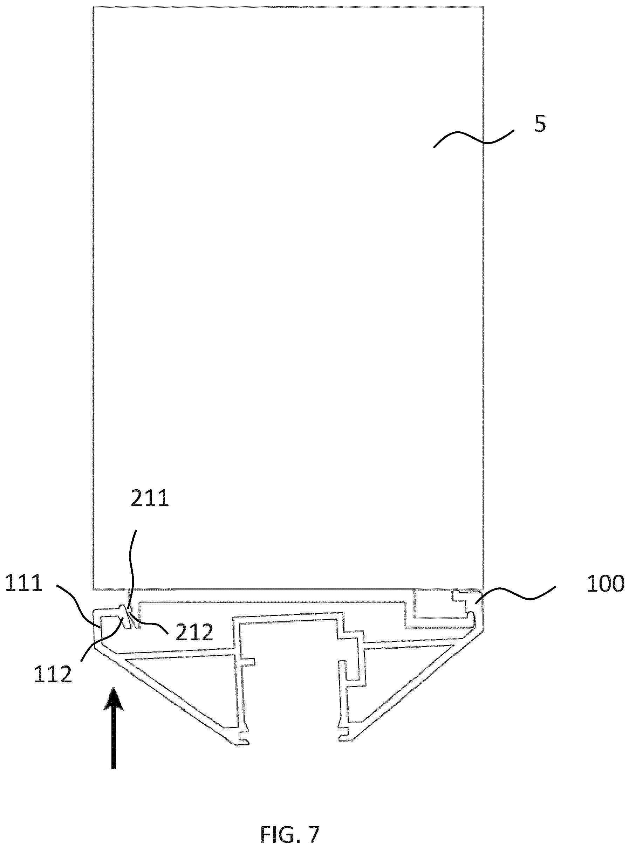

The abovementioned coupling is illustrated in more detail in figure 7. When pushing onto light section 100 as indicated by the arrow, arm 111 will deflect or bent outwardly allowing light section 100 to move upward towards beam 5. Once protrusion 112 aligns with recess 211, arm 111 will snap back into recess 211. From that moment onwards, downward movement of light section 100 is prevented by the interaction between protrusion 112 and ledge 212.

On the opposing edge, coupling structure 200 is provided with further coupling means, referred to as third coupling means 220. As shown in figure 2, coupling means 220 comprises a laterally outwardly oriented opening 221. Similarly, on the opposing edge, light section 100 is provided with further coupling means, referred to as first coupling means 120 that comprises a laterally inwardly extending body 121 configured to be at least partially received in opening 221.

Body 121 comprises a recess 122 that is configured to engage a protrusion 222 arranged in opening 221. Recess 122 and protrusion 222, when brought into engagement, define a pivoting axis about which light section 100 can pivot relative to coupling structure 200.

Body 121 comprises a central part 123 and an arm 124 extending away from central part 123. At an end thereof, arm 124 is provided with a protrusion 125. Furthermore, coupling means 120 comprises a first side section 126 and a second side section 127 that is connected to and obliquely extends from first side section 126.

Coupling means 220 comprises a laterally outwardly extending section 223, wherein opening 221 is formed between section 223 and a wall 51 of beam 5. Alternatively, wall 51 can be a part of coupling means 220.

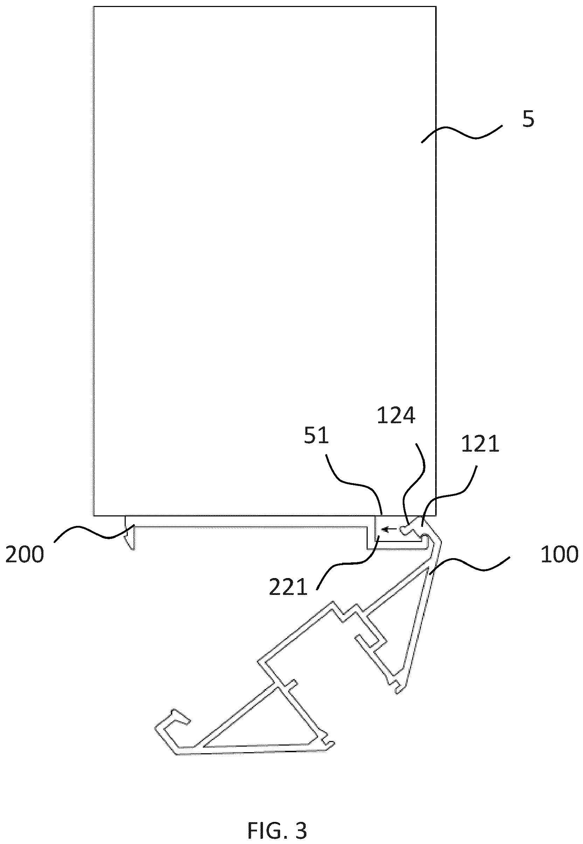

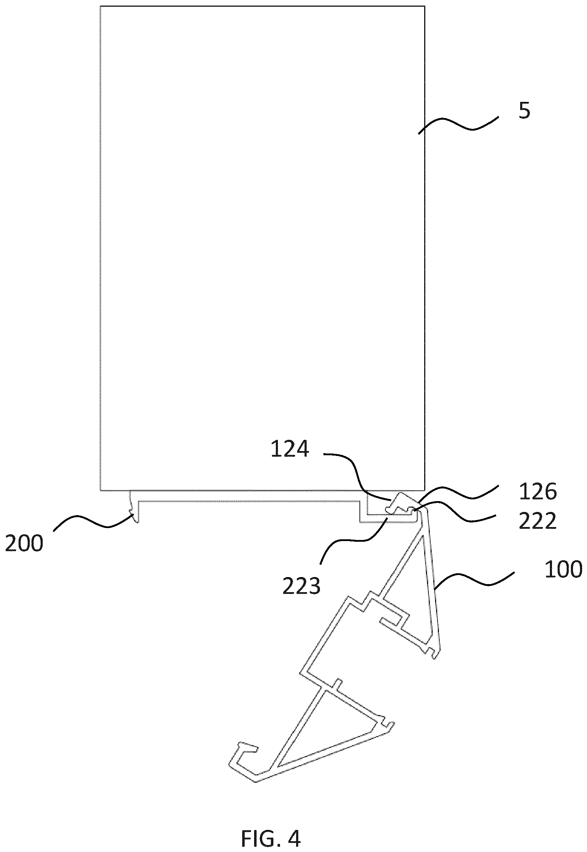

Figure 3 illustrates how light section 100 can be coupled to coupling structure 200. More in particular, body 121 and opening 221 are shaped such that body 121 can be inserted into opening 221 with arm 124 being held obliquely relative to wall 51 of opening 221. After moving light section 100 more inwardly, the situation as depicted in figure 4 is obtained. This situation is referred to as the first coupling state. In this state, light section 100 is hanging freely on coupling structure 200. In the first coupling state, protrusion 222 abuts first side section 126 and arm 124 abuts first section 223. As shown, counter-clockwise pivoting of light section 100 is prevented by arm 124 abutting first section 223. Clockwise pivoting of light section 100 is prevented by the center of mass of light section 100 being situated to the left relative to the point at which protrusion 222 engages first side section 126.

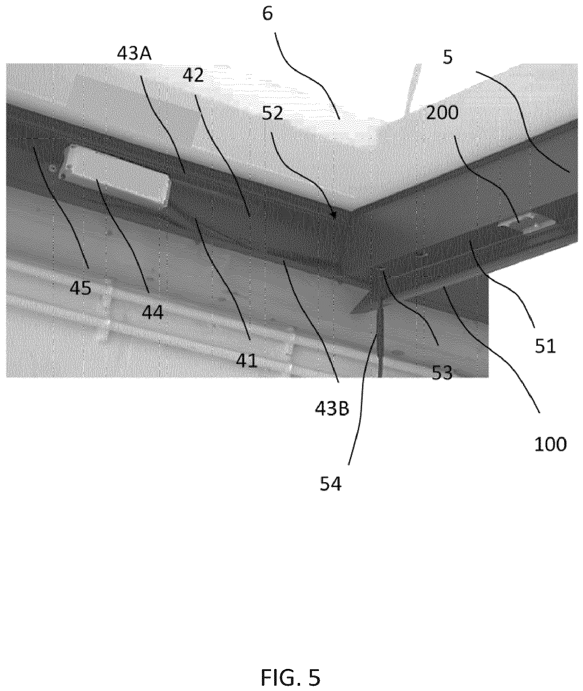

Due to the inherent stability of the coupling between light section 100 and coupling structure 200 in the first coupling state, it is possible for a user to let loose of light section 100. In this manner, a user can use both his hands for realizing the electrical connection of light section 100. This is shown in more detail in figure 5.

Beam 5 has an at least partially open supported end 52. Furthermore, beam 5 has a bottom side 51 that is provided with an opening 53. In the first coupling state, electrical wiring 54 of the LED strip can be fed through 53 and can be pushed such that electrical wiring 54 moves towards supported end 52 of beam 5.

As shown in figure 5, beam 5 is coupled to supporting structure 4. More in particular, supporting structure 4 is formed as an elongated profile in which electrical wiring 41 is guided. Supporting structure 4 comprises a first plate segment 42 and a pair of second plate segments 43A, 43B extending substantially perpendicular to first plate segment 42. Beam 5 is coupled to second plate segments 43A, 43B using a bolted connection. A clearance exists between supported end 42 and first plate segment 42.

Having pushed electrical wiring 54 sufficiently far through beam 5, it will emerge from the supported end 52, allowing a user, via the clearance, to grasp electrical wiring 54 and to connect it to electrical wiring 41. Thereafter, first plate segment 42 may be provided with a cover plate (not shown) to hide electrical wiring 41. Typically, electrical wiring 41 is the low voltage output of a transformer 44 of which the input is connected to mains electricity using electrical wiring 45.

Because feeding electrical wiring 54 through opening 53 and the subsequent pushing through the hollow inside of beam 5 can only be achieved when light section 100 is coupled to coupling structure 200, it is advantageous that the user may use both hands for this purpose.

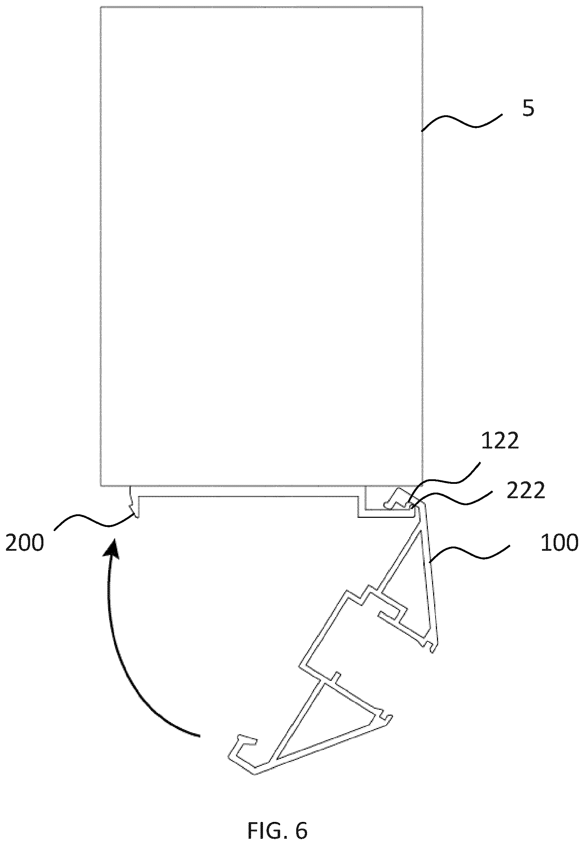

After having made the electrical connection, or at least after having pushed electrical wiring 41 sufficiently far, the user may pivot light section 100 relative to coupling structure 200. This is shown in more detail in figures 6-8. More in particular, figures 6 and 7 illustrate that, when simultaneous or prior to making the clockwise rotation, light section 100 will move relative to coupling structure 200 such that protrusion 222 engages recess 122 thereby forming a pivoting axis. When coupling means 110 and 210 are brought close together the user may exert an upward force to enable the snap-fit connection that was previously discussed.

In the final situation, shown in figure 8, which corresponds to the second coupling state, arm 124 extends parallel to wall 51 and abuts wall 51 via protrusion 125 thereby preventing further clockwise pivoting. Furthermore, protrusion 222 is clamped between body 121, first side section 126 and second side section 127. The electrical connection between electrical wiring 41 and electrical wiring 54 is inaccessible to a user in the second coupling state.

In the above, the supporting structure comprises a profile that is mounted to a facade of a building. However, the present invention is not limited thereto. More in particular, the supporting structure may be any structure that supports the beam or girder and/or is coupled thereto. For example, the supporting structure may comprise an at least partially hollow girder, beam, upright, post, or column, in which electrical wiring 41 is provided.

In the above, the present invention has been explained using detailed embodiments thereof. However, the present invention is not limited to these embodiments. Various modifications are possible without departing from the scope of the present invention which is defined by the appended claims and their equivalents.

## Claims

1. A construction such as a sun porch, roof, terrace roof, porch, or veranda, comprising:
an at least partially hollow beam or girder having a first outer side;
a supporting structure to which the beam or girder is coupled and/or that supports the beam;
first electrical wiring guided by or provided in the supporting structure;
an electrical section comprising at least one of a light section that includes one or more light sources, a heating section that includes one or more heating elements, and a sound section that includes one or more speakers, the electrical section further comprising second electrical wiring for electrically connecting the one or more light sources, one or more heating elements, and/or one or more speakers;
wherein the first electrical wiring is configured to be electrically connected to an external source of electrical energy; and
wherein the electrical section comprises first and second coupling means arranged on opposite edges of a first side of the electrical section;
wherein the beam or girder comprises third and fourth coupling means arranged on opposite edges of the first outer side;
wherein the first, second, third, and fourth coupling means are configured to:
in a first coupling state, couple the electrical section to the beam or girder in a free-hanging manner by mutual engagement of the first and third coupling means;
in a second coupling state, fasten the electrical section to the beam or girder, preferably releasably, by mutual engagement of the first and third coupling means and by mutual engagement of the second and fourth coupling means; and
wherein the first electrical wiring and second electrical wiring are configured to be electrically coupled in the first coupling state.

2. The construction according to claim 1, wherein the first outer side of the beam or girder is provided with an opening, wherein an end of the beam or girder is at least partially open, wherein the second electrical wiring is configured to be inserted through the opening in the first coupling state, and configured to be fed through the at least partially open end;
wherein, preferably:
the supporting structure is configured for supporting the end of the beam or girder, the construction further comprising a clearance between the supported end and the supporting structure allowing a user to grasp the second electrical wiring and to connect the first electrical wiring and the second electrical wiring, wherein the supporting structure preferably comprises a elongated profile in which the first electrical wiring is guided, said elongated profile comprising a first plate segment and one or more second plate segments extending substantially perpendicular to the first plate segment, wherein the beam or girder is configured to be coupled to the one or more second plate segments, and wherein said clearance is formed between the supported end and the first plate segment, wherein the first plate segment is preferably configured to be coupled to a facade of building.

3. The construction according to claim 1, wherein the beam or girder comprises a further opening near an end of the beam or girder, wherein the second electrical wiring is configured to be inserted through the opening in the first coupling state, and configured to be fed through the further opening.

4. The construction according to any of the previous claims, wherein the supporting structure comprises an at least partially hollow girder, beam, upright, post, ceiling, or column, in which the first electrical wiring is provided.

5. The construction according to any of the previous claims, further comprising a roof element supported by the beam or girder and/or a plurality of said beams or girders and/or a plurality of said roof elements.

6. The construction according to any of the previous claims, wherein an electrical connection between the first electrical wiring the second electrical wiring is configured to be inaccessible to a user in the second coupling state.

7. The construction according to any of the previous claims, wherein the second and fourth coupling means are configured to form a snap-fit connection, wherein the second and fourth coupling means are preferably configured to form a cantilever snap-fit connection;
wherein one of the second and fourth coupling means preferably comprises a beam that is provided with a protrusion at one end and that is supported on an other end, and wherein the other of the second and fourth coupling means comprises a recess or opening, wherein the second and fourth coupling means are configured to be coupled to each other by an initial deflection of the beam followed by a snapping back of the beam once the protrusion and recess are aligned;
wherein the beam is preferably comprised by the second coupling means.

8. The construction according to any of the previous claims, wherein the first and third coupling means are configured to enable the electrical section to pivot relative to the beam or girder about a pivoting axis that extends in a first direction when switching from the first to the second coupling state;
wherein the third coupling means preferably comprises a first laterally outwardly oriented opening and wherein the first coupling means comprises a first laterally inwardly extending body configured to be at least partially received in the first opening.

9. The construction according to claim 8, wherein the first body is provided with one of a protrusion and recess, and wherein the third coupling means are provided with the other of the protrusion and recess arranged inside the first opening, said protrusion and recess being configured to engage each other for the purpose of co-defining the pivoting axis and for allowing the electrical section to pivot relative to the beam or girder when switching from the first coupling state to the second coupling state;
wherein the protrusion preferably extends in a direction perpendicular to the first outer side and/or wherein the protrusion and recess are preferably complementary shaped;
wherein the protrusion and recess are preferably configured to allow the electrical section to pivot relative to the beam or girder in a second direction such that the third and fourth coupling means are brought closer to each other;
wherein, in the second coupling state, the first body preferably abuts a wall of the first opening thereby preventing further pivoting in the second direction.

10. The assembly according to claim 9, wherein the first body comprises a central body part and an arm extending away from the central body part, said arm being configured to extend parallel to and abut the wall of the first opening thereby preventing further pivoting in the second direction in the second coupling state;
wherein the first body and first opening are preferably shaped such that:
the first body can be inserted into the first opening with the arm being held obliquely relative to the wall of the first opening;
in the second coupling state, the first body is clamped in the first opening against lateral displacement relative to the beam or girder by the arm abutting the wall and by the protrusion engaging the recess.

11. The construction according to any of the claims 9-10, wherein the protrusion is comprised by the second coupling means;
wherein the second coupling means comprises a laterally outwardly extending first section, wherein the first opening is formed between the first section and said wall of the beam or girder, wherein the protrusion is formed at an outward end of the first section.

12. The construction according to claim 11, wherein the first coupling means comprises a first side section and a second side section that is connected to and obliquely extends from the first side section, the first side section being connected to the first body and to the second side section, wherein the first side section is shaped to abut the protrusion such that, in the second coupling state, the protrusion is clamped between the first body, the first side section and the second side section;
wherein, in so far as depending on claim 10, the first coupling means and second coupling means are preferably configured such that, when in the first coupling state, the protrusion abuts the first side section, and the arm abuts the first section;
wherein the first and second coupling means are preferably configured such that when switching from the first to the second coupling state, the electrical section is first allowed to displace relative to the beam or girder to bring the protrusion into engagement with the recess after which the electrical section can be pivoted relative to the beam or girder to bring the third and fourth coupling means into engagement with each other.

13. The construction according to claim 12, wherein the beam or girder comprises a central part and a coupling structure connected to a first outer side of the central part, wherein the coupling structure comprises the second and fourth coupling means;
wherein the wall is preferably either defined by the central part or is part of the coupling structure;
wherein the coupling structure is preferably integrally connected to the central part of the beam or girder, said beam or girder preferably being an extrusion section, and/or for example made from stainless steel, aluminum, or a polymeric material such as polyvinyl chloride (PVC), high impact polystyrene (HIPS), acrylonitrile butadiene styrene (ABS), thermoplastic elastomer (TPE), Polyethylene terephthalate glycol (PETG), or high-density polyethylene (HDEP), or wherein the coupling structure preferably comprises mechanical coupling means with which it is coupled to the central part of the beam or girder, said coupling structure preferably being an extrusion section, for example made from stainless steel, aluminum, or a polymeric material such as polyvinyl chloride (PVC), high impact polystyrene (HIPS), acrylonitrile butadiene styrene (ABS), thermoplastic elastomer (TPE), Polyethylene terephthalate glycol (PETG), or high-density polyethylene (HDEP).

14. The construction according to any of the previous claims, wherein the electrical section is an extrusion section, for example made from stainless steel, aluminum, or a polymeric material such as polyvinyl chloride (PVC), high impact polystyrene (HIPS), acrylonitrile butadiene styrene (ABS), thermoplastic elastomer (TPE), Polyethylene terephthalate glycol (PETG), or high-density polyethylene (HDEP);
wherein the electrical section preferably comprises one or more light sources that are arranged on an elongated strip like substrate, and wherein the electrical section preferably comprises an elongated substrate receiving space in which the substrate is received, and an elongated blocking strip space in which a blocking strip is received, said blocking strip fixating the strip relative to a remainder of the light section;
wherein the one or more light sources preferably comprises one or more light-emitting diodes, LEDs.

15. An assembly for connecting an electrical section to a construction such as a sun porch, roof, terrace roof, porch, or veranda, comprising:
a coupling structure as defined in claim 13; and
and an electrical section structure as defined in any of the previous claims.
